# EUROPÄISCHE PATENTSCHRIFT

(11) **EP 0 832 588 B1**
(45) Veröffentlichungstag und Bekanntmachung des Hinweises auf die Patenterteilung: **28.04.2004**
(21) Anmeldenummer: 97115147.7
(22) Anmeldetag: 02.09.1997
(51) Int. Cl.: A47G 1/17

(54) **Wiederlösbare, selbstklebende Vorrichtung**
Removable adhesive device
Dispositif adhésif amovible

(30) Priorität: 13.09.1996 DE 19637222; 11.07.1997 DE 19729706
(43) Veröffentlichungstag der Anmeldung: 01.04.1998
(73) Patentinhaber: Tesa AG, 20253 Hamburg (DE)
(72) Erfinder: Lühmann, Bernd, Dr., 22846 Norderstedt (DE); Junghans, Andreas, 22457 Hamburg (DE)

(56) Entgegenhaltungen:
- WO-A-92/11333

## Beschreibung

Die Erfindung betrifft eine wiederablösbare, selbstklebende Vorrichtung, die rückstandsfrei durch Ziehen an der an ihr angeordneten Klebfolie aus ihrer Verklebung wieder gelöst werden kann.

Solche Vorrichtungen, insbesondere Haken sind bekannt. So beschreibt **DE 42 33 872 C2** einen wiederablösbaren, selbstklebenden Haken, der mit einer auf Zug entklebenden Klebfolie ausgerüstet ist und der als "tesa® Power-Strips mit Haken" im Handel erhältlich ist. Auch ein sogenannter Systemhaken mit Basisplatte und aufsteckbarem Dekorhaken ist als "tesa® Power-Strip Systemhaken" im Handel.

Auch aus **WO 94121157** ist ein solcher Haken bekannt, der sich vom vorgenannten insbesondere durch den Einsatz einer solchen Klebfolie unterscheidet, die hochdehnbar und zugleich nicht rückstellend ist.

Bei dem praktischen Einsatz derartiger Vorrichtungen können jedoch Probleme auftreten, insbesondere beim späteren Ablösen. Denn eine wiederlösbare Verklebung wird in allen o.g. Fällen durch eine Verstreckung des zur Verklebung eingesetzten einseitig oder beidseitig mit einem Haftkleber versehenen Selbstklebebandes erreicht. Hierzu wird ausgehend von einem Anfasser das Klebeband im wesentlichen parallel zur Verklebungsebene in Richtung des Anfassers gezogen. Durch die erzeugte Dehnung des Klebebandes löst sich dieses rückstandslos vom Untergrund. **WO 92/11332**, **WO 92/11333**, WO 94/21157 und **WO 95/06691** geben als maximalen Abzugswinkel für ein rückstandsfreies Wiederablösen einen Winkel von 35° zwischen Verklebungsebene und Dehnrichtung an. Zusätzlich zu einer hohen Dehnfähigkeit sind für das rückstandsfreie und vollständige Herauslösen des Klebebandes aus einer Klebfuge eine niedrige Dehnspannung bei niedrigen bis mittleren Dehnungen verbunden mit einer hinreichend hohen Reißfestigkeit bei hohen Dehnungen wesentlich. Die Reißfestigkeit muß für einen sicheren Ablöseprozeß hierbei deutlich oberhalb der Kraft liegen, welche zum Herauslösen des Klebebandes aus der Klebfuge (Stripkraft) nötig ist. Liegt die Stripkraft höher als die Reißfestigkeit des Klebebandes, so reißt das Klebeband beim Löseprozeß.

Interessante Anwendungen zuvor beschriebener Selbstklebebänder umfassen u.a. den Einsatz in Klebehaken, wie sie häufig im Haushalt in Bad und Küche Einsatz finden (siehe DE 42 33 872, WO 94/21157, US 5,507,464) oder auch spezieller Adaptersysteme. Im Handel erhältlich sind dabei u.a. Klebehaken mit modularem Aufbau (tesa Power-Strips Systemhaken), bestehend aus einer Basisplatte auf die der Hakenkörper adaptiert wird. Über entsprechende Basisplatten lassen sich dabei Formkörper verschiedenster Ausformungen adaptieren, welche eine große Variationsbreite der Anwendungen ermöglichen. Beispiele umfassen Adapter für die Fixierung von Kabeln, Spiegeln, Bildern etc.

Nachteilig bei den bislang bekannten Problemlösungen ist, daß das Lösen der Klebbindung durch Ziehen der Klebestreifen im Wesentlichen in der Verklebungsebene geschehen muß. Fehlanwendungen für den unerfahrenen Nutzer sind damit vorprogrammiert. Wird das Klebeband in einem merklichen Winkel gegen die Verklebungsebene oder gar senkrecht nach vorn abgezogen, so kann es durch die zusätzlich auftretenden Reibungskräfte und den zusätzlichen Andruck zwischen Klebeband und verklebtem Gegenstand bzw. der eingesetzten Basisplatte im Bereich der Abzugskante der Klebstoff-Folie zum Reißen des Klebebandes kommen. Die hier relevante Reißfestigkeit ist dabei nicht identisch mit der nach DIN 53504 im Reißkraft/Reißdehnungsexperiment ermittelten. Sie liegt vielmehr, bedingt durch das Herausziehen der Klebstoff-Folien aus der Klebfuge unter einem von 0° verschiedenen Winkel, bei meist erheblich niedrigeren Werten. Eine Erhöhung der Reißfestigkeiten der verwendeten Klebebänder ist eine Möglichkeit, die Reißerneigung zu reduzieren. Eine entsprechende Maßnahme ist jedoch oft nur begrenzt möglich, da sie (z.B. der Einsatz dickerer Selbstklebebänder oder reißfesterer Zwischenträger) nicht selektiv ohne nachteiligen Einfluß auf andere Produkteigenschaften, wie z.B. auf die Dehnfähigkeit, durchgeführt werden kann.

Ein Reißen des Klebebandes kann ebenfalls auftreten, wenn das Verstrecken des Klebebandes, wie vorgesehen, im Wesentlichen in der Ebene der Verklebung und in Richtung des Anfassers vorgenommen wird. In vielen Fällen hat es sich gezeigt, daß die Ursache von Reißern in diesem Fall darin besteht, daß der Anwender den zu lösenden Gegenstand während des Löseprozesses mit sehr hohem Kraftaufwand senkrecht gegen den verklebten Gegenstand drückt. Auch hierdurch wird die zum Herausziehen des Klebebandes aus der Klebfuge notwendige Kraft derart weit erhöht, daß die Reißfestigkeit überschritten wird, mit der unerfreulichen Konsequenz für den Anwender, daß das Klebeband reißt und die Verklebung nicht mehr rückstands- und zerstörungsfrei gelöst werden kann.

Und schließlich gibt es viele Anwendungen, bei denen aus Gründen der räumlichen Grenzen ein Ziehen in Richtung der Verklebungsebene nicht möglich ist, etwa weil die Verklebung in einer Vertiefung oder in einer Ecke vorgenommen wurde.

Aufgabe der vorliegenden Erfindung war es, die vorgenannten Nachteile zu überwinden.

Gelöst wird dies erfindungsgemäß durch eine Vorrichtung, wie sie in den Patentansprüchen näher beschrieben ist.

So betrifft die Erfindung eine wiederablösbare, selbstklebende Vorrichtung mit einer Platte, deren Seiten und/oder Vorderseite gegebenenfalls Mittel zur Befestigung aufweisen und deren Rückseite einen Streifen einer beidseitig klebenden Klebfolie derart aufgeklebt aufweist, dass ein Ende der Klebfolie als Anfasser die Platte überragt, wobei die Klebfolie eine solche ist, dass die mit ihr erzielte Verklebung durch den Streifen streckendes Ziehen wieder lösbar ist, dadurch gekennzeichnet, dass die Platte (1) an ihrem rückseitigen Ende zumindest in dem Bereich (3A, 3B), in dessen unmittelbarer Nähe der Anfasser (6) des Klebfolien-Streifens (5) liegt, gegenüber dem Klebfolien-Streifen (5) eine geringe Haft- und Gleitreibung hat, so dass beim Ablöseprozess des Klebfolien-Streifens (5) vom Untergrund die Summe von Stripkraft und Reibungskraft bei Abzugswinkeln über 0° niedriger als die Reißkraft des Klebfolien-Streifens (5) ist.

Bevorzugt ist dabei eine Vorrichtung, bei der die Stripkraft bei einem Abzugswinkel von 60° nicht mehr als das dreifache, bevorzugt das zweifache der Stripkraft beim Abzugswinkel von 0° beträgt.

Besonders bevorzugt ist dabei eine Vorrichtung, bei der die Stripkraft bei einem Abzugswinkel von 90° nicht mehr als das dreifache, bevorzugt das zweifache der Stripkraft beim Abzugswinkel von 0° beträgt.

Bevorzugt ist ferner eine Vorrichtung, bei der der Bereich (3A, 3B), der dem Anfasser (6) anliegt, gegenüber dem Klebfolien-Streifen zudem eine Stripkraft bei einem Abzugswinkel von 60° erlaubt, die das dreifache der Stripkraft beim Abzugswinkel von 0°, bevorzugt das zweifache der Stripkraft beim Abzugswinkel von 0° beträgt.

Besonders bevorzugt ist ferner eine Vorrichtung, bei der der Bereich (3A, 3B), der dem Anfasser (6) anliegt, gegenüber dem Klebfolien-Streifen zudem eine Stripkraft bei einem Abzugswinkel von 90° erlaubt, die das dreifache der Stripkraft beim Abzugswinkel von 0°, bevorzugt das zweifache der Stripkraft beim Abzugswinkel von 0° beträgt.

Bevorzugt ist ferner eine Vorrichtung, bei der der Bereich (3A, 3B), der dem Anfasser (6) anliegt, eine niederenergetische Oberfläche aufweist, auf Basis von fluorhaltigen Polymeren, siliziumorganischen Polymeren, Polyolefinen oder auf Basis von Polymeren, welche fluorhaltige Segmente, Segmente aus siliziumorganischen Polymeren oder Polyolefinsegmente enthalten oder solche auf Basis eines Gemisches vorgenannter Polymere ggf. mit weiteren Polymeren.

Bevorzugt ist ferner eine Vorrichtung, bei der der Bereich (3A, 3B), der dem Anfasser (6) anliegt, eine Oberflächenspannung von bis zu 37 mN/m aufweist.

Bevorzugt ist ferner eine Vorrichtung, bei der der Bereich (3A, 3B), der dem Anfasser (6) anliegt, zusammen mit der Platte (1) als integriertes Spritzgußteil aus Kunststoff ausgebildet ist.

Bevorzugt ist ferner eine Vorrichtung, bei der die Klebfolie mit oder ohne Zwischenträger elastisch oder plastisch dehnbar ist.

Bevorzugt ist ferner eine Vorrichtung, bei der die Adhäsion der Klebfolie geringer als die Kohäsion ist, das Haftvermögen beim Dehnen der Folie weitgehend verschwindet, und das Verhältnis von Abzugskraft zu Reißlast mindestens 1 : 2,0, insbesondere 1 : 3,0 ist, wobei die Klebfolie eine solche auf Basis von thermoplastischem Kautschuk und klebrigmachenden Harzen ist, mit hoher Elastizität und geringer Plastizität.

Bevorzugt ist ferner eine Vorrichtung, bei der die Rückseite der Klebfolie (5) mit einem Trennlaminat, wie einem silikonisierten Trennpapier oder einer Trennfolie, abgedeckt ist.

Bevorzugt ist ferner eine Vorrichtung, bei der sich an der Vorderseite der Platte (1) ein Haken befindet.

Bevorzugt ist ferner eine Vorrichtung, bei der die Platte (1) an ihrer Rückseite (2) seitlich neben dem aufgeklebten Klebfolien-Streifen (5) Abstandshalter (8A, 8B) aufweist, deren Höhe geringer als die Dicke des Klebfolien-Streifens (5) ist.

Bevorzugt ist ferner eine Vorrichtung, bei der sich die Abstandshalter (8A, 8B) zu beiden Seiten neben dem aufgeklebten Klebfolien-Streifen (5) befinden.

Bevorzugt ist ferner eine Vorrichtung, bei der die Abstandshalter (8A, 8B) als Stege oder Segmente ausgebildet sind.

Bevorzugt ist ferner eine Vorrichtung, bei der die Abstandshalter (8A, 8B) als Spritzgußteil zusammen mit der Platte (1) ausgebildet sind.

Bevorzugt ist ferner eine Vorrichtung, bei der die Abstandshalter (8A, 8B) 30 - 90 % der Dicke des aufgeklebten Klebfolien-Streifens (5) beträgt, bei einer Dicke des Klebfolien-Streifens (5) von 0,65 mm insbesondere 0,3 - 0,6 mm.

Zudem betrifft die Erfindung die Verwendung einer Platte für eine solche Vorrichtung zum wiederlösbaren, selbstklebenden Befestigen und wieder Lösen durch Ziehen an dem Anfasser des Streifens in einem zur Verklebungsebene etwa senkrechten Winkel, insbesondere in einem solchen Winkel von 45° 135° zur Verklebungsebene.

Vorteilhaft ist die Höhe der Abstandshalter so gewählt, daß diese geringer ist als die Dicke der Klebstoff-Folie (unverstreckt), so daß eine einwandfreie Verklebung mit dem Haftgrund möglich ist. Durch die beim Ablösevorgang auftretende Dehnung der Klebstoff-Folie verjüngt sich selbige in Breite und Dicke entsprechend. Ist die beim Ablösen erreichte Dicke der Klebstoff-Folie niedriger als die Höhe der Abstandshalter, so ist ein reißerfreies Ablösen der Klebstoff-Folie auch dann möglich, wenn gleichzeitig hohe Anpreßdrucke vertikal zur Verklebung auftreten, welche sonst zu einem Reißen des Klebebandes geführt hätten.

Durch Einsatz von Platten, welche anfasserseitig im Kantenbereich der Verklebung ein Material enthalten, welches möglichst niedrige Haft- und niedrige Gleitreibungskoeffizienten zur jeweils eingesetzten Klebstoff-Folie aufweisen, ist ein rückstandsfreies Lösen der Verklebung auch dann möglich, wenn der Winkel zwischen Verklebungsebene und Abzugsrichtung deutlich größer als 0° ist, insbesondere etwa 45 - 135°, insbesondere 60 - 100° beträgt.

Besonders vorteilhaft ist dabei eine Kombination dieser Elemente, also eine Platte mit einem Bereich geringer Haft- und Gleitreibung an dem Ende, über das der Klebfolien-Streifen gezogen werden soll, sowie ausgerüstet mit Abstandshaltern seitlich von dem aufgeklebten Klebfolien-Streifen, um bei einem zu kräftigen Andrücken der Platte beim Abziehen des Klebfolien-Streifens dennoch ein leichtes und reißfreies Abziehen zu ermöglichen.

Da der Anwender einer erfindungsgemäßen Platte möglicherweise nicht erkennt, über welchem ihrer Enden er den Klebfolien-Streifen mit seinem Anfasser überstehend plazieren soll, um ihn dann später über diese Kante abzuziehen, ist vorteilhaft an beiden Enden der Platte ein derartiger Bereich vorgesehen. Bei einer solchen symmetrischen Ausgestaltung hat der Anwender insofern keine Sorge zu tragen.

Eine weitere vorteilhafte Möglichkeit ist es, eine erfindungsgemäße Platte, welche lediglich einen Kantenbereich mit geringer Haft- und Gleitreibung aufweist, derartig auszugestalten, daß selbiger Bereich durch sein optisches Erscheinungsbild, etwa seine Farbigkeit, visuell leicht von der ihr gegenüberliegenden Kante, welche keine entsprechend geringe Haft- und Gleitreibung besitzt, differenziert werden kann.

Erfindungsgemäß eignen sich als Klebstoff-Folien insbesondere solche entsprechen DE 33 31 016, DE 42 22 849, DE 42 33 872, WO 92/11333 und WO 94/21157.

So beschreibt DE 33 31 016 A1 eine Klebfolie für wiederlösbare Klebbindungen, die es gestattet, daß eine damit hergestellte Klebbindung durch Ziehen an der Klebfolie in Richtung der Verklebungsebene lösbar ist. Mit solchen Klebfolien lassen sich hohe Klebkräfte und Scherfestigkeiten erzielen und Klebverbunde ohne weitere Hilfsmittel wieder lösen, vergleichbar dem Öffnen eines Weckglases, ähnlich wie dort die Gummidichtung am Anfasser aus der Dichtungsfuge gezogen wird.

DE 42 22 849 C1 beschreibt eine derartige Klebfolie mit einem UV-undurchlässigen Anfasser.

Auch WO 92/11333 beschreibt unter anderem Klebfolien für entsprechende Anwendungen, wobei die eingesetzten Klebfolien eine geringe Elastizität bei gleichzeitig hoher Dehnung aufweisen.

Auch doppelseitige Selbstklebebänder mit Schaumstoff-Zwischenträger, z.B. aus Polyethylen-Schaum, lassen sich erfindungsgemäß einsetzen.

Generell sei zur Herstellung, Verarbeitung und Handhabung von den besonders bevorzugten Klebfolien auf DE 33 31 016, DE 42 22 849 und WO 92/11333 verwiesen.

Als Material für die Platte bzw. Formkörper, insbesondere als Basisplatten, eignen sich Kunststoff, Metall, Holz (beschichtet, z.B. lackiert und unbeschichtet), Keramik und dergleichen. Insbesondere kann die Platte selbst aus einem Material geformt sein. welches eine geringe Haft- und Gleitreibung gegenüber den eingesetzten Klebstoff-Folien aufweist.

### Reduzierung von Haft- und Gleitreibung und adhäsiven Wechselwirkungen zwischen (Basis-)Platte und Klebstoff-Folie beim Wiederablöseprozeß

Erfindungsgemäße Formkörper bzw. (Basis-)Platten dienen zur einseitigen Aufnahme der Klebstoff-Folie, deren andere Seite auf den ausgewählten Untergrund verklebt wird. Auf die Basisplatte können unterschiedlichste Adapter plaziert werden, u.a. Hakenkörper. Die Platte kann aber auch selbst als Haken oder dergleichen ausgebildet sein, also auf ihrer Vorderseite z.B. eine hakenartige Haltevorrichtung aufweisen. Zur Erzeugung einer hohen Verklebungsfestigkeit besteht die Basisplattenfläche auf der Seite, auf die die Klebstoff-Folie appliziert wird, insbesondere aus einem Material, welches eine für den jeweiligen Anwendungsfall ausreichende Adhäsion zur Klebstoff-Folie aufweist. Bei der Verwendung von Haftklebemassen auf Basis von Styrolblockcopolymeren oder Acrylatcopolymeren wird hierbei insbesondere vorteilhafterweise Polystyrol, schlagzähmodifizierte Polystyrole, PMMA, aromatische Polyester, Polycarbonat oder Polyamide einschließlich aromatenhaltiger Polyamide eingesetzt. Erfindungsgemäße Basisplatten sind an wenigstens einer Kante (über die später der Ablöseprozeß erfolgt) derart modifiziert, daß der Kantenbereich aus einem Material besteht, welches niedrige Haft- und Gleitreibungsbeiwerte gegenüber der eingesetzten Klebstoff-Folie aufweist, was i.a. mit einer geringen Adhäsion der Klebstoff-Folien zu diesem Bereich korrespondiert. Die Reibungskoeffizienten sind dabei derart einzustellen, daß die Summe von Stripkraft und Reibungskraft auch bei Abzugswinkeln deutlich über 0° vom Untergrund niedriger als die Reißkraft der verwendeten Klebstoff-Folien unter den gegebenen Versuchsbedingungen ausgelegt ist. Eine ausreichende Erniedrigung der Reibungskräfte wird z.B. dadurch erreicht, daß der Kantenbereich der Basisplatte von einer niederenergetischen Kunststoffoberfläche gebildet wird. Geeignete Einsatzmaterialien sind u.a. fluorhaltige Polymere, insbesondere perfluorierte Polymere, z.B. Poly(tetrafluorethylen), siliziumorganische Polymere, z.B. Poly(dimethylsiloxan), Polyolefine, z.B. Poly(ethylen), insbesondere Poly(ethylene) hoher Dichte, welche insbesondere Oberflächenspannungen von ≤ ca. 37 mN/m aufweisen. Bevorzugt geeignet sind feste, während des Ablöseprozesses sich wenig verformende Materialien. Geeignet sind neben den o. g. Polymeren solche, welche fluorhaltige Segmente, Segmente aus siliziumorganischen Polymeren oder Polyolefinsegmente enthalten.

Eingesetzt werden können weiterhin Gemische vorgenannter Polymere sowie Abmischungen vorgenannter Polymere mit weiteren Polymeren.

Die Ausrüstung einer Basisplattenkante mit einem der vorgenannten Materialien kann im Falle von Spritzgußartikeln durch entsprechende Vorkehrungen beim Spritzgießen von Kunststoffkörpern erfolgen (Verwendung mehrerer Polymere im Spritzgußprozeß; 2 Komponentenspritzen). Eine andere Möglichkeit ist das nachträgliche Aufbringen eines Kunststoffes in Form eines passenden Formteiles im Kantenbereich der Basisplatte. Eine weitere Möglichkeit bietet die nachträgliche Beschichtung von Basisplatten im Kantenbereich mittels eines der o.g. Polymere. Beschichtungsmöglichkeiten umfassen die Beschichtung aus Lösung, Dispersion oder als 100%-System aus der Schmelze. Optional können die beschichteten Materialien einer nachträglichen Vernetzung unterzogen werden.

Umgekehrt kann als Basisplattenmaterial selber ein Kunststoff gewählt werden, welcher niedrige Reibungskoeffizienten bzw. eine niedrige Adhäsion zu den verwendeten Klebstoff-Folien aufweist. Bei Bedarf kann die entsprechende Basisplatte im Verklebungsbereich der Klebstoff-Folie, jedoch nicht im Kantenbereich, über den das Ablösen der Klebstoff-Folie erfolgt, derart ausgerüstet oder behandelt werden, daß eine hohe Adhäsion zur Klebstoff-Folie und damit hohe Klebkräfte, Scherfestigkeiten und Stirnzugfestigkeiten ermöglicht werden. Entsprechende Vorbehandlungsmethoden können z.B. die Beflammung, die Corona- und Plasmabehandlung, die Gasphasenfluorierung oder auch eine naßchemische Vorbehandlungsmethode sein. Optional ist zusätzlich die Behandlung der Oberfläche mit einem Primer möglich.

Erfindungsgemäß kann ein niedriger Reibungskoeffizient zwischen Klebstoff-Folie und Basisplattenkante auch über den Einbau einer drehbaren Rolle oder die Aneinanderreihung mehrerer drehbarer Kugeln in das Ende der Basisplatte erreicht werden (Ausnutzung der Rollreibung). Entsprechende Lösungen erscheinen jedoch i.a. komplizierter und damit ökonomisch weniger interessant als die zuvor beschriebenen Methoden.

### Verbesserung der Ablösbarkeit durch in die Basisplatte (in den Formkörper) integrierte Distanzhalter

Zur Realisierung eines reißerfreien Abzugverhaltens auch bei Einwirkung hoher senkrecht zur Verklebungsebene einwirkender Kräfte (z.B. über hohen Anpreßdruck beim Lösen der Klebbindung) ist der Formkörper bzw. die Basisplatte auf der Seite, die die Klebstoff-Folie trägt, vorzugsweise mit Abstandshaltern (z.B. Stegen) ausgerüstet. Abstandshalter können beidseitig neben der Klebstoff-Folie in gesamter Länge der Basisplatte, jedoch auch nur in bestimmten Teilbereichen hiervon vorhanden sein. Spezielle Ausformungen, rechtwinklig stegartig, abgerundet stegartig, punktförmig, etc. sind möglich.

Versuche mit unterschiedlichen wiederablösbaren Klebstoff-Folien zeigen, daß typische Stripdehnungen je nach Art und Aufbau der verwendeten Klebstoff-Folien zwischen ca. 100% und 800% liegen. In der Praxis zeigt sich im Falle von im wesentlichen kautschukelastischen Klebstoff-Folien, daß die Höhe der Distanzhalter mindestens ca. 0,05 mm, bevorzugterweise 0,10 mm höher sein sollte als die Dicke der verstreckten Klebstoff-Folien beim Ablöseprozeß. Für eine sichere Verklebung ist andererseits die Abstandshalterhöhe ca. 0,05 mm, bevorzugterweise 0,1 mm, besonders bevorzugt 0,15 mm geringer zu halten als die Dicke der Klebstoff-Folien im nichtverstreckten Zustand. Die angegebenen Werte beziehen sich auf ebene feste Haftgründe. Im Falle von rauhen und/oder leicht deformierbaren Haftgründen können sowohl für einen einwandfreien Verklebungsprozeß (ausreichender Anpreßdruck), als auch für ein einwandfreies Wiederablösen höhere als die genannten Werte sinnvoll sein.

Im folgenden soll die Erfindung anhand von Beispielen und Figuren erläutert werden, ohne sie jedoch unnötig einschränken zu wollen.

Es zeigen:
- Figur 1: eine schräg-seitliche Ansicht einer erfindungsgemäßen Platte, und
- Figur 2: eine Seitenansicht gemäß Figur 1, mit aufgeklebtem Klebfolien-Streifen,
- Figur 3: eine schräg-seitliche Ansicht einer weiteren Platte,
- Figur 4: eine schräg-seitliche Ansicht einer wiederum weiteren Platte, und
- Figur 5: eine Front-Ansicht einer Platte gemäß Figur 4.

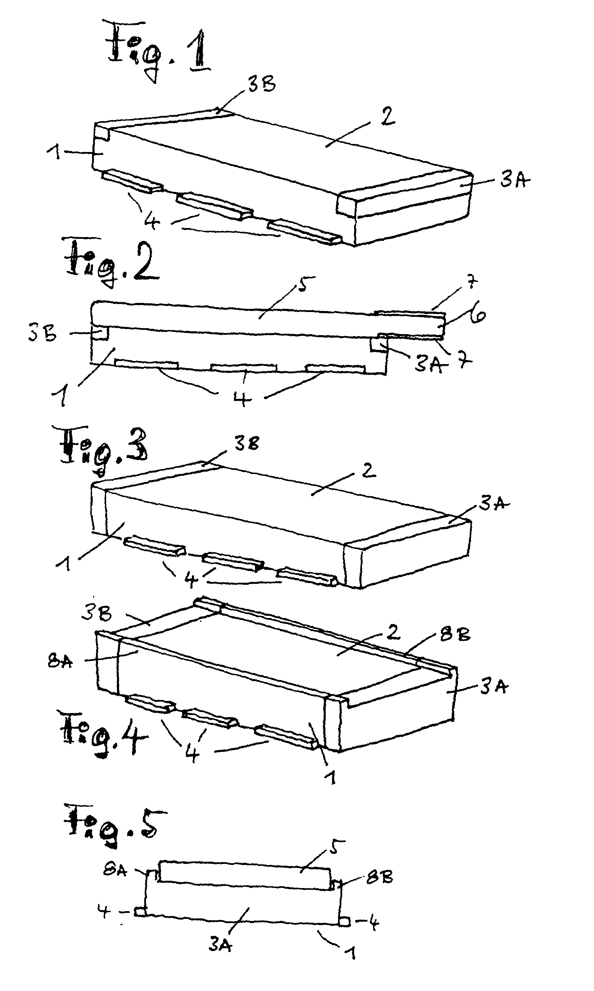

Im einzelnen zeigt Figur 1 eine Platte (1) mit seitlich angeordneten Rast-Vorrichtungen (4), die in entsprechende Rast-Vorrichtungen eines aufzusteckenden Teils einrasten können, etwa einen Haken oder dergleichen, wie er als Systemhaken für "tesa® Power-Strips" im Handel ist. Die Rückseite (2) der Platte (1) dient dazu, den Klebfolien-Streifen (5) (Figur 2) aufzukleben, wobei die Bereiche (3A) und (3B) dieser Rückseite (2), die dem Anfasser (6) des Klebfolien-Streifens (5) anliegen, aus einem Material geringer Haft- und Gleitreibung gegenüber zahlreicher Haftklebemassen bestehen, hier aus Polyethylen hoher Dichte. Da der Anwender die Platte (1) mit dem Klebfolien-Streifen (5) so bekleben kann, daß der Anfasser (6) sowohl an dem einen als auch an dem anderen Ende überstehen kann, sind beide Bereiche (3A) und (3B) so ausgerüstet, daß diese Bereiche eine geringe Haft- und Gleitreibung bzw. Adhäsion zu den verwendeten Klebstoff-Folien aufweisen.

Figur 2 zeigt die Platte (1) mit aufgeklebtem Klebfolien-Streifen (5), dessen Anfasser (6) mit dünnen Folien (7) nicht-klebend abgedeckt ist.

In Figur 3 ist eine andere Ausführungsform dargestellt, bei der die Platte (1) eine Rückseite (2) zeigt, die zur Aufnahme eines nicht dargestellten Klebfolien-Streifens dient, und die an beiden Enden Bereiche (3A) und (3B) aufweist, die aus Polyethylen hoher Dichte bestehen. Auch weist die Platte (1) Rast-Vorrichtungen (4) auf, wie gemäß Figur 1.

Figur 4 zeigt eine weitere bevorzugte Ausführungsform einer Platte (1) mit einer Rückseite (2), die zur Aufnahme eines nicht dargestellten Klebfolien-Streifens dient, und die entsprechend Figur 3 mit Bereichen (3A) und (3B) aus Polyethylen hoher Dichte sowie Rast-Vorrichtungen (4) ausgerüstet ist. Zusätzlich weist die Platte (1) jedoch zu beiden Seiten der Rückseite (2) Abstandshalter (8A) und (8B) auf, ausgebildet als Stege, deren Höhe etwa die Hälfte der Dicke des aufzubringenden Klebfolien-Streifens beträgt, wobei der Abstand der Abstandshalter (8A) und (8B) so gewählt ist, daß der Klebfolien-Streifen mit seiner Breite leicht dazwischen plaziert werden kann, wie dies in der Vorderansicht gemäß Figur 5 mit Platte (1) und Bereich (3A) am Stirnende, Rast-Vorrichtungen (4) und Abstandshaltern (8A) und (8B), sowie einen dazwischen plazierten Klebfolien-Streifen (5).

### Beispiel 1

In Beispiel 2 beschriebene Klebstoff-Folien werden auf distanzhalterlose Basisplatten der Abmessungen 3 mm x 40 mm x 20 mm bestehend aus Polyethylen (PE 300; Fa. Arthur Krüger), Styroblend KR 2776 (BASF). Polystyrol (Vestyron 214; Chemische Werke Hüls) und Stahl appliziert, die so erhaltenen Probekörper danach auf einen planaren Stahluntergrund fixiert. Die Prüfkörperpräparation entspricht der des Beispiels 2. Zum Wiederablösen werden die Basisplatten auf der Seite, auf der der Anfasser hervorragt, weitestgehend andruckfrei mit Daumen und Fingern von einer Testperson auf der Stahlunterlage gehalten, danach die Klebfolienstreifen in unterschiedlichen Winkeln langsam aus der Klebfuge herausgezogen. Die Separationsgeschwindigkeit beträgt ca. 1000 mm/min. Geprüft wird, ob sich die Klebstoff-Folien reißerfrei aus der Klebfuge lösen lassen.

| **Basisplattenmaterial** | **Oberflächenspannung*** | **reißerfrei ablösbar / Stripkraft in N/cm bei Abzugswinkel von** | | | |
|---|---|---|---|---|---|
| | **in mN/m** | **ca. 5°** | **30°** | **60°** | **90°** |
| Polyethylen | < 34 | ja / 9 | ja / 12 | ja / 14 | ja / 15 |
| Styroblend KR 2776 | ca 36 | ja / 9 | ja / 12 | ja / 15 | ja / 21 |
| Polystyrol | ca. 38 | ja / 10 | nein / >25 | nein / >25 | nein / >25 |
| Stahl | - | ja / 10 | ja / 17 | ja / 23 | nein / >25 |

| | | | | | |
|---|---|---|---|---|---|
| *entsprechend DIN 53364 | | | | | |

Bei Verwendung von Polyethylen und Styroblend KR 2776 als Basisplattenmaterial ist ein reißerfreies Wiederablösen der Basisplatten bei allen hier überprüften Abzugswinkeln möglich.

### Beispiel 2

Für eine einschichtige Klebstoff-Folie nachfolgender Rezeptur:
- 50 Tle Foralyn 110 (Hercules), 50 Tle Vector 4211 (Exxon Chemical), 0,5 Tle Irganox 1010 (Ciba)
der Dicke 650 µm wird eine Höchstzugkraft von 52 N/cm entsprechend 8,0 MPa und eine Reißdehnung von 1300% ermittelt.

20 mm x 50 mm messende rechteckige Stücke der Klebstoff-Folie werden derart mittig auf Basisplatten bestehend aus Stahl der Abmessungen 3 mm x 40 mm x 22 mm (Höhe x Länge x Breite) verklebt, daß die Basisplatten einseitig über deren ganze Länge mit der Klebstoff-Folie bedeckt sind und ein 10 mm langer Klebstoff-Folienstreifen über eine der kurzen Seiten der Basisplatten herausragt, welcher zum späteren Ablösen als Anfasser genutzt werden kann. Die Basisplatten sind auf der Seite, auf die die Klebstoff-Folien appliziert werden, an beiden Längskanten mit 0,5 mm breiten Abstandshaltern unterschiedlicher Höhe versehen. Mit Klebstoff-Folien ausgerüstete Basisplatten werden auf einen planaren Resopaluntergrund verklebt. Hierzu werden die mit den Klebstoff-Folien ausgerüsteten Basisplatten flächig auf den Resopaluntergrund appliziert und für 5 Sekunden mit 500 N angedrückt. Die so fixierten Prüfkörper werden zum Ablösen der Klebstoff-Folien in einem zweiten Arbeitsgang mit einer vertikal auf die Verklebungsebene einwirkenden Kraft von ebenfalls 500 N beaufschlagt, der Klebfolienstreifen anschließend in einem Winkel von < 10° gegenüber der Verklebungsebene aus der Klebfuge herausgezogen. Zum Vergleich werden die Versuche ohne vertikal auf die Verklebungsebene einwirkende Kraft durchgeführt. Die Stripgeschwindigkeit beträgt bei allen Versuchen ca. 1000 mm/min. Es ergeben sich nachfolgende Ergebnisse:

| **Höhe der Abstandshalter** | **Vertikale Andruckkraft 500 N** | **ohne vertikale Kraft- einwirkung** |
|---|---|---|
| kein Abstandshalter | Strip reißt | reißerfrei ablösbar |
| 0,3 mm | *reißerfrei ablösbar* | reißerfrei ablösbar |
| Stripkraft* | 10 // 14 N/cm | |
| 0,4 mm | *reißerfrei ablösbar* | reißerfrei ablösbar |
| Stripkraft* | 9 // 15 N/cm | |
| 0,5 mm | *reißerfrei ablösbar* | reißerfrei ablösbar |
| Stripkraft* | 9 // 10 N/cm | |
| 0,6 mm | *reißerfrei ablösbar* | reißerfrei ablösbar |
| Stripkraft* | 9 // 10 N/cm | |
| 0,7 mm | keine Verklebung möglich | keine Verklebung möglich |

| | | |
|---|---|---|
| * Mittelwert // maximaler Wert (der maximale Wert wird zum Ende des Stripvorganges erreicht). | | |

Unter den gewählten Versuchsbedingungen lassen sich bei Einwirkung hoher vertikaler auf die Basisplatte einwirkender Kräfte ausschließlich mit Distanzhalter versehene Basisplatten reißerfrei wiederablösen.

### Beispiel 3

Basisplatten entsprechend Beispiel 1 mit einer Distanzhalterhöhe von 0,5 mm werden derart modifiziert, daß an der Kante, über die die Klebstoff-Folien abgelöst werden ein 1 mm tiefes und ebenso breites rechteckiges Metallstück herausgefräst wird. In die Vertiefung wird ein 0,7 mm x 1 mm x 20 mm (Höhe x Breite x Tiefe) messendes Kunststoffteil aus PTFE, Polyethylen (PE 300; Fa. Arthur Krüger), Styroblend KR 2776 (BASF), Polyamid (Ertalon 6 SA, Fa. Arthur Krüger) bzw. ein 0,12 mm x 1,5 mm x 20 mm (Höhe x Breite x Länge) messendes silikonisiertes Trennpapier (Natrosil 20 291; Schleipen & Erkens) eingeklebt. Die nachfolgende Prüfkörperpräparation entspricht der des Beispiels 1. Entsprechend Beispiel 2 wird geprüft, ob sich die Klebstoff-Folien reißerfrei aus der Klebfuge herausziehen lassen. Während des Lösevorganges wird die Basisplatte jedoch nicht spannungsfrei gehalten, vielmehr wirkt, wie in Beispiel 1, vertikal auf die Verklebungsebene eine Kraft von 500 N auf die Prüfkörper ein.

| **Basisplattenkantenmaterial** | **Oberflächenspannung*** | **reißerfrei ablösbar / Stripkraft in N/cm bei Abzugswinkel von** | | | |
|---|---|---|---|---|---|
| | **in mN/m** | **ca. 5°** | **30°** | **60°** | **90°** |
| PTFE | < 30 | ja / 9 | ja / 10 | ja / 11 | ja / 12 |
| Polyethylen | < 34 | ja / 9 | ja / 11 | ja / 13 | ja / 15 |
| Styroblend KR | ca. 36 | ja / 9 | ja / 12 | ja / 14 | ja / 20 |
| 2776 | | | | | |
| Polyamid | ca. 42 | ja / 9 | ja / 12 | ja / 16 | nein / >20 |
| silikonisiertes | | | | | |
| Trennpapier | < 30 | ja / 9 | ja / 15 | ja / 18 | ja / 23 |
| Stahl | - | ja / 9 | ja / 15 | ja / 20 | nein / >25 |
| zum Vergleich: Basisplattenkantenmaterial = Basisplattenkernmaterial = Polystyrol | | | | | |
| Polystyrol | ca. 38 | ja / 10 | nein / >25 | nein / >25 | nein / >25 |

Ein reißerfreies Herauslösen aus der Klebfuge im gesamten betrachteten Abzugswinkelbereich ist bei Verwendung von Materialien mit niederenergetischen Oberflächen möglich.

## Patentansprüche

1. Wiederablösbare, selbstklebende Vorrichtung mit einer Platte, deren Seiten und/oder Vorderseite gegebenenfalls Mittel zur Befestigung aufweisen und deren Rückseite einen Streifen einer beidseitig klebenden Klebfolie derart aufgeklebt aufweist, dass ein Ende der Klebfolie als Anfasser die Platte überragt, wobei die Klebfolie eine solche ist, dass die mit ihr erzielte Verklebung durch den Streifen streckendes Ziehen wieder lösbar ist, **dadurch gekennzeichnet, dass** die Platte (1) an ihrem rückseitigen Ende zumindest in dem Bereich (3A, 3B), in dessen unmittelbarer Nähe der Anfasser (6) des Klebfolien-Streifens (5) liegt, gegenüber dem Klebfolien-Streifen (5) eine geringe Haft- und Gleitreibung hat, so dass beim Ablöseprozess des Klebfolien-Streifens (5) vom Untergrund die Summe von Stripkraft und Reibungskraft bei Abzugswinkeln über 0° niedriger als die Reißkraft des Klebfolien-Streifens (5) ist.

2. Vorrichtung nach Anspruch 1, **dadurch gekennzeichnet, dass** die Stripkraft bei einem Abzugswinkel von 60° nicht mehr als das dreifache, bevorzugt das zweifache der Stripkraft beim Abzugswinkel von 0° beträgt.

3. Vorrichtung nach Anspruch 1, **dadurch gekennzeichnet, dass** die Stripkraft bei einem Abzugswinkel von 90° nicht mehr als das dreifache, bevorzugt das zweifache der Stripkraft beim Abzugswinkel von 0° beträgt.

4. Vorrichtung nach Anspruch 1, **dadurch gekennzeichnet, dass** der Bereich (3A, 3B), der dem Anfasser (6) anliegt. gegenüber dem Klebfolien-Streifen zudem eine Stripkraft bei einem Abzugswinkel von 60° erlaubt, die das dreifache der Stripkraft beim Abzugswinkel von 0°, bevorzugt das zweifache der Stripkraft beim Abzugswinkel 0° beträgt.

5. Vorrichtung nach Anspruch 1, **dadurch gekennzeichnet, dass** der Bereich (3A, 3B), der dem Anfasser (6) anliegt, gegenüber dem Klebfolien-Streifen zudem eine Stripkraft bei einem Abzugswinkel von 90° erlaubt, die das dreifache der Stripkraft beim Abzugswinkel von 0°, bevorzugt das zweifache der Stripkraft beim Abzugswinkel 0° beträgt.

6. Vorrichtung nach Anspruch 1, **dadurch gekennzeichnet, dass** der Bereich (3A, 3B), der dem Anfasser (6) anliegt, eine niederenergetische Kunststoffoberfläche aufweist, wie aus einem fluorhaltigen Polymeren, einem siliziumorganischen Polymeren oder einem Polyolefin oder auf Basis von Polymeren, welche fluorhaltige Segmente, Segmente aus siliziumorganischen Polymeren oder Polyolefinsegmente enthalten oder auf Basis eines Gemisches vorgenannter Polymere ggf. mit weiteren Polymeren.

7. Vorrichtung nach Anspruch 1, **dadurch gekennzeichnet, dass** der Bereich (3A, 3B), der dem Anfasser (6) anliegt, eine Oberflächenspannung von bis zu 37 mN/m aufweist.

8. Vorrichtung nach Anspruch 1, **dadurch gekennzeichnet, dass** der Bereich (3A, 3B), der dem Anfasser (6) anliegt, zusammen mit der Platte (1) als integriertes Spritzgussteil aus Kunststoff ausgebildet ist.

9. Vorrichtung nach Anspruch 1, **dadurch gekennzeichnet, dass** die Klebfolie mit oder ohne Zwischenträger elastisch oder plastisch dehnbar ist.

10. Vorrichtung nach Anspruch 1, **dadurch gekennzeichnet, dass** die Adhäsion der Klebfolie geringer als die Kohäsion ist, das Haftvermögen beim Dehnen der Folie weitgehend verschwindet, und das Verhältnis von Abzugskraft zu Reißlast mindestens 1 : 2,0 ist, wobei die Klebfolie eine solche auf Basis von thermoplastischem Kautschuk und klebrigmachenden Harzen ist, mit hoher Elastizität und geringer Plastizität.

11. Vorrichtung nach Anspruch 1, **dadurch gekennzeichnet, dass** die Rückseite der Klebfolie (5) mit einem Trennlaminat, wie einem silikonisierten Trennpapier oder einer Trennfolie, abgedeckt ist.

## Claims

1. Redetachable, self-adhesive device having a plate, the sides and/or front side of which have fastening means, if appropriate, and the rear side of which has a.strip of an adhesive film which is adhesive on both sides and is adhesively attached in such a way that one end of the adhesive film protrudes beyond the plate as a grip, the adhesive film being of such a kind that the adhesive bond achieved with it can be released again by pulling, stretching the strip, **characterized in that** the plate (1) has at its rear end, at least in the region (3A, 3B) in the direct proximity of which the grip (6) of the adhesive film strip (5) lies, low stick and slip friction with respect to the adhesive film strip (5), so that in the process of detaching the adhesive film strip (5) from the underlying surface the sum of the stripping force and frictional force at pulling-off angles over 0° is lower than the tearing force of the adhesive film strip (5).

2. Device according to Claim 1, **characterized in that** the stripping force at a pulling-off angle of 60° is no more than three times, preferably two times, the stripping force at the pulling-off angle of 0°.

3. Device according to Claim 1, **characterized in that** the stripping force at a pulling-off angle of 90° is no more than three times, preferably two times, the stripping force at the pulling-off angle of 0°.

4. Device according to Claim 1, **characterized in that** the region (3A, 3B) which bears against the grip (6) allows moreover with respect to the adhesive film strip a stripping force at a pulling-off angle of 60° which is three times the stripping force at the pulling-off angle of 0°, preferably two times the stripping force at the pulling-off angle 0°.

5. Device according to Claim 1, **characterized in that** the region (3A, 3B) which bears against the grip (6) allows moreover with respect to the adhesive film strip a stripping force at a pulling-off angle of 90° which is three times the stripping force at the pulling-off angle of 0°, preferably two times the stripping force at the pulling-off angle 0°.

6. Device according to Claim 1, **characterized in that** the region (3A, 3B) which bears against the grip (6) has a low-energy plastic surface, such as of a fluorine-containing polymer, an organo-silicon polymer or a polyolefin or based on polymers which contain fluorine-containing segments, segments of organo-silicon polymers or polyolefin segments or based on a mixture of the aforementioned polymers, if appropriate with further polymers.

7. Device according to Claim 1, **characterized in that** the region (3A, 3B) which bears against the grip (6) has a surface tension of up to 37 mN/m.

8. Device according to Claim 1, **characterized in that** the region (3A, 3B) which bears against the grip (6) is formed together with the plate (1) as an integrated injection-moulded part of plastic.

9. Device according to Claim 1, **characterized in that** the adhesive film, with or without an intermediate substrate, is elastically or plastically extensible.

10. Device according to Claim 1, **characterized in that** the adhesion of the adhesive film is less than the cohesion, the adhesiveness is to a great extent dissipated when the film is extended, and the ratio of pulling-off force to tearing load is at least 1:2.0, the adhesive film being of the kind which is based on thermoplastic rubber and tackifying resins, with high elasticity and low plasticity.

11. Device according to Claim 1, **characterized in that** the rear side of the adhesive film (5) is covered with a release laminate, such as a siliconized release paper or a release film.

## Revendications

1. Dispositif autocollant détachable doté d'une plaque dont les côtés et/ou le côté avant présentent éventuellement des moyens de fixation et sur le côté arrière de laquelle est collée une bande de feuille adhésive double face, de telle sorte qu'une extrémité de la feuille adhésive déborde de la plaque pour servir de dispositif de saisie, la feuille adhésive étant une feuille adhésive qui peut être détachée par traction sur la bande après avoir été collée, **caractérisé en ce que** sur son côté arrière, au moins dans la zone (3A, 3B) à proximité immédiate de laquelle est situé le dispositif de saisie (6) de la bande (5) de feuille adhésive, la plaque (1) présente un faible frottement d'adhérence et de glissement par rapport à la bande (5) de feuille adhésive, de sorte que lors de l'opération de libération de la bande (5) de feuille adhésive du support, la somme de la force d'arrachage et de la force de frottement est inférieure à la force de déchirure de la bande (5) de feuille adhésive lorsque l'angle d'enlèvement est supérieur à 0°.

2. Dispositif selon la revendication 1, **caractérisé en ce que** pour un angle d'enlèvement de 60°, la force d'arrachage n'est pas supérieure au triple et de préférence n'est pas supérieure au double de la force d'arrachage pour un angle d'enlèvement de 0°.

3. Dispositif selon la revendication 1, **caractérisé en ce que** pour un angle d'enlèvement de 90°, la force d'arrachage n'est pas supérieure au triple et de préférence n'est pas supérieure au double de la force d'arrachage pour un angle d'enlèvement de 0°.

4. Dispositif selon la revendication 1, **caractérisé en ce que**.la zone (3A, 3B) qui est contiguë au dispositif de saisie (6) permet de plus à un angle d'enlèvement de 60° une force d'arrachage qui représente le triple de la force d'arrachage à un angle d'enlèvement de 0° et de préférence le double de la force d'arrachage pour un angle d'enlèvement de 0° par rapport à la bande de feuille adhésive.

5. Dispositif selon la revendication 1, **caractérisé en ce que** la zone (3A, 3B) qui est contiguë au dispositif de saisie (6) permet de plus à un angle d'enlèvement de 90° une force d'arrachage qui représente le triple de la force d'arrachage à un angle d'enlèvement de 0° et de préférence le double de la force d'arrachage pour un angle d'enlèvement de 0° par rapport à la bande de feuille adhésive.

6. Dispositif selon la revendication 1, **caractérisé en ce que** la zone (3A, 3B) qui est contiguë au dispositif de saisie (6) présente une surface en matière synthétique à faible énergie, par exemple en polymère fluoré, en polymère organique du silicium ou polyoléfine, ou à base de polymères qui contiennent des segments fluorés, des segments en polymères organiques du silicium ou des segments en polyoléfines, ou à base d'un mélange des polymères précités et éventuellement d'autres polymères.

7. Dispositif selon la revendication 1, **caractérisé en ce que** la zone (3A, 3B) qui est contiguë au dispositif de saisie (6) présente une tension superficielle qui peut atteindre 37 nN/m.

8. Dispositif selon la revendication 1, **caractérisé en ce que** la zone (3A, 3B) qui est contiguë au dispositif de saisie (6) est réalisée en même temps que la plaque (1) comme pièce intégrée en matière synthétique moulée par injection.

9. Dispositif selon la revendication 1, **caractérisé en ce que** la feuille adhésive, avec ou sans support intermédiaire, est élastiquement ou plastiquement extensible.

10. Dispositif selon la revendication 1, **caractérisé en ce que** l'adhérence de la feuille adhésive est inférieure à la cohésion, **en ce que** la capacité adhésive disparaît largement lors de l'extension de la feuille et **en ce que** le rapport entre la force d'enlèvement et la charge de déchirure est d'au moins 1:2,0, la feuille adhésive étant une feuille à base de caoutchouc thermoplastique et de résines rendant adhésif, à haute élasticité et faible plasticité.

11. Dispositif selon la revendication 1, **caractérisé en ce que** le côté arrière de la feuille adhésive (5) est recouvert par un stratifié de séparation, par exemple un papier siliconé de séparation ou une feuille de séparation.
